# EUROPEAN PATENT APPLICATION

(11) **EP 2 503 788 A1**
(43) Date of publication of application: **26.09.2012**
(21) Application number: 12160867.3
(22) Date of filing: 22.03.2012
(51) Int. Cl.: H04N 21/44, H04N 21/454, G06F 17/30

(54) **Apparatus, systems and methods for control of inappropriate media content events**

(30) Priority: 22.03.2011 US 201113053487
(71) Applicant: Eldon Technology Limited, Steeton, Keighley BD20 6QW (GB)
(72) Inventor: Burton, David Robert, Skipton, Yorkshire BD23 2JG (GB)
(74) Representative: Reeve, Nicholas Edward

(57) **Abstract**

Systems and methods are operable to prevent presentation of inappropriate media content. An exemplary embodiment receives a media content event; identifies at least one characteristic of the media content event; compares the identified characteristic with a plurality of predefined content characteristics, wherein each of the predefined content characteristics are associated with at least one type of inappropriate media content event; and defines the media content event as an inappropriate media content event in response to the identified characteristic corresponding to at least one of the plurality of predefined content characteristics.

## Description

### BACKGROUND

Media devices, such as a set top box, a stereo, a television, a computer system, a game system, or the like are configured to receive media content. The media content may be received at the media device from a variety of sources. For example, the media device may be communicatively coupled to a media content provider system, such as a satellite system, a cable system, a fiber optic system, an over the air (OTA) system, and/or the Internet. The received media content is communicated to a presentation device having a display and/or speakers. The video portion of the media content is presented on the display and the audio portion of the media content is reproduced as sounds by the speakers.

In some instances, the media device may be configured to receive media content from other sources. For example, the media device may be configured to communicatively couple to an electronic device with a memory medium, or that is configured to access a memory medium. Accordingly, the user of the media device may retrieve a movie or other media content event, which may then be communicated to the media presentation device for presentation. Such exemplary electronic devices include digital video disk (DVD) players, video cassette recorders (VCRs), disk drivers, or the like. As another example, the media device may be configured to be coupled directly to a memory medium, such as a flash memory (FM) device that employs a uniform serial bus (USB) connector.

Some media content events may not be appropriate for young adults or children. Many devices and schemes are in place to enable parental control rights that restrict access to such inappropriate media content events by the young adults or children. However, such devices and schemes rely on information that is associated with the media content event, such as the well known motion picture rating system that classifies media content events with regard to suitability for audiences in terms of issues such as sex, violence, substance abuse, profanity, or other types of mature content. Information pertaining to the rating, or certification, for a particular media content event may be included in the metadata portion of the media content event. The detectable rating information may be used to limit access under various parental control schemes.

In some systems, rating information or other information applicable to parental control rights management may be included with the provided media content events when the media device is accessing media content events over the media content provider system. For example, metadata information and/or a trigger may be used in conjunction with an onboard parental control rights scheme. When the received media content event is processed by the media device, the rating information is compared to parental control settings. If the rating information violates the parental control setting information, presentation of the inappropriate media content event may be halted, terminated or otherwise disrupted.

However, in many situations, existing parental control devices and schemes are not able to determine if access rights should be restricted. For example, adult oriented media content or other inappropriate media content that does not have rating information may be accessed by the media device from a DVD player, a flash memory device, or other accessible memory medium having the adult film stored thereon. To limit access, the DVD, the flash memory device, or other memory medium must be kept under the physical control of the parent. However, in the event that the young adult or child obtains physical possession of the DVD, the flash memory device, or other memory medium, there is no other way to stop the young adult or child from accessing the inappropriate media content.

As another example, the inappropriate media content event may be accessed over a non-secured communication link, such as over the Internet from an internet site. To limit access to the inappropriate media content, the media device that is configured to access the Internet must be kept under the physical control of the parent, and/or its use supervised by the parent. However, in the absence of supervision by the parent, there is no way to stop the young adult or child from accessing the inappropriate media content in the event that the young adult or child obtains physical possession of the media device.

Accordingly, there is a need in the arts to manage access to inappropriate media content by young adults or children who have devised ways to defeat and/or circumvent existing parental control rights devices and/or schemes.

### SUMMARY

Systems and methods of preventing presentation of inappropriate media content are defined in the independent claims to which reference should now be made. Advantageosu features are set forth in the dependent claims.

An exemplary embodiment receives a media content event; identifies at least one characteristic of the media content event; compares the identified characteristic with a plurality of predefined content characteristics, wherein each of the predefined content characteristics are associated with at least one type of inappropriate media content event; and defines the media content event as an inappropriate media content event in response to the identified characteristic corresponding to at least one of the plurality of predefined content characteristics.

The identifying and the comparing amy comprise: identifying an object in a video portion of the received media content event; and comparing the identified object with a plurality of predefined objects residing in a media content characteristic database, wherein the plurality of predefined objects are associated with inappropriate media content events.

The identifying and the comparing may further comprise: identifying an audio characteristic in an audio portion of the received media content event; and comparing the identified audio characteristic with a plurality of predefined audio information residing in a media content characteristic database, wherein the plurality of predefined audio information are associated with inappropriate media content events.

The identifying and the comparing may also comprise: identifying text in a video portion of the received media content event; and comparing the identified text with a plurality of predefined text residing in a media content characteristic database, wherein the plurality of predefined text are associated with inappropriate media content events.

The identifying and the comparing may also comprise: identifying an actor of the received media content event; and comparing the identified actor with a plurality of predefined actors identified in a media content characteristic database, wherein the plurality of predefined actors are associated with inappropriate media content events.

Identifying the actor may comprise: identifying an image of the actor; and comparing the identified image of the actor with a plurality of predefined images of actors identified in the media content characteristic database.

Identifying the actor may comprise: identifying a voice of the actor; and comparing the identified voice of the actor with a plurality of predefined voices of actors identified in the media content characteristic database.

Identifying the actor may comprise: identifying a name of the actor; and comparing the identified name of the actor with a plurality of predefined names of actors identified in the media content characteristic database.

In one example, the method comprises: halting presentation of the defined inappropriate media content event on a media content presentation device.

Halting the presentation can include preventing communication of the defined inappropriate media content event to the media content presentation device.

Halting the presentation can include: preventing reception of the media content event.

In one example, the method further comprises: preventing storage of the defined inappropriate media content event on a memory media.

In one example, the method further comprises: preventing communication of the defined inappropriate media content event to a remote electronic device.

In a further example, a media device is provided, comprising: a media content stream interface configured to receive a media content event; a memory configured to store a plurality of media content characteristics in a media content characteristic database; and a processor system communicatively coupled to the media content stream interface and the memory, wherein the processor system is configured to: identify at least one characteristic of the media content event; compare the identified characteristic with a plurality of predefined content characteristics, wherein each of the predefined content characteristics are associated with at least one type of inappropriate media content event; and define the media content event as an inappropriate media content event in response to the identified characteristic corresponding to at least one of the plurality of predefined content characteristics.

The media device may further comprise: a presentation device interface configured to communicatively couple to a media content presentation device, wherein the processor system is configured to prevent a presentation of the defined inappropriate media content event on the media content presentation device.

The processor system can be configured to prevent reception of the defined inappropriate media content event at the media content stream interface.

The media device may further comprise: a communication system interface configured to communicatively couple to a communication system, wherein the processor system is configured to prevent communication of the defined inappropriate media content event to a remote electronic device coupled to the communication system.

The media device may further comprise a digital video recorder (DVR) configured to store media content events, wherein the processor system is configured to prevent storing of the defined inappropriate media content event on the DVR.

In a second example, a method is provided, comprising the steps of: communicating a media content event to a media content presentation device; analyzing the communicated media content event to identify at least one characteristic of the media content event; comparing the identified characteristic with a plurality of predefined content characteristics stored in a media content characteristic database, wherein each of the predefined content characteristics are associated with at least one type of inappropriate media content event; and preventing communication of the media content event to the media content presentation device in response to the identified characteristic corresponding to at least one of the plurality of predefined content characteristics.

Ending communication of the media content event to the media content presentation device may comprise preventing reception of the media content event.

### BRIEF DESCRIPTION OF THE DRAWINGS

Preferred and alternative embodiments are described in detail below with reference to the following drawing:

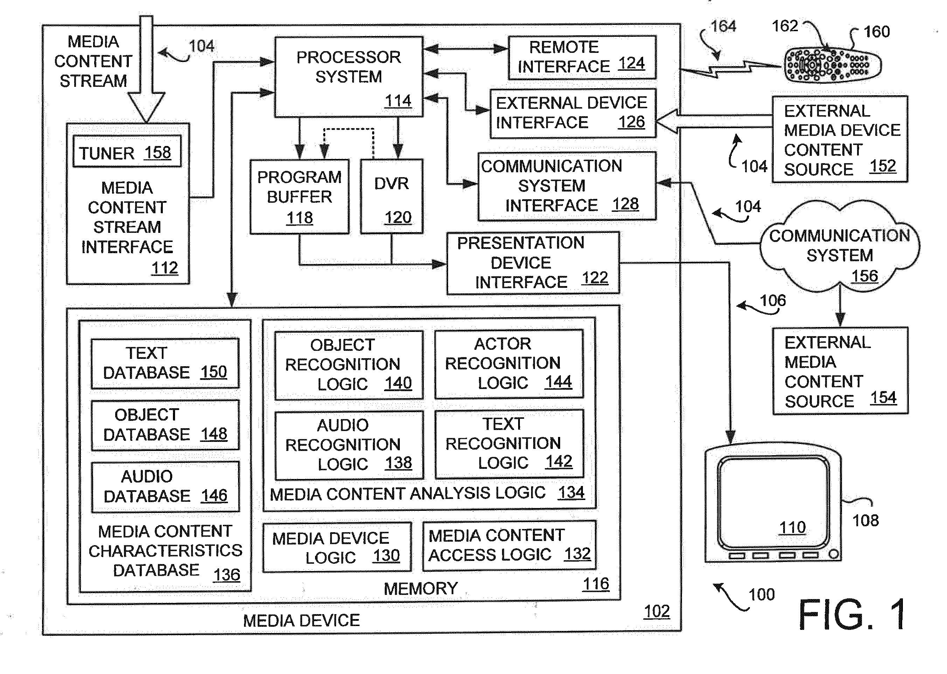

FIGURE 1 is a block diagram of an embodiment of a media content analysis system implemented in a media device.

### DETAILED DESCRIPTION

FIGURE 1 is a block diagram of an embodiment of a media content analysis system 100 implemented in a media device 102. Exemplary media devices 102 include, but are not limited to, a set top box (STB), a stereo, a surround-sound receiver, a radio, a television (TV), a digital video disc (DVD) player, a smart phone, a digital video recorder (DVR), a game playing device, or a personal computer (PC).

In operation, the media device 102 is configured to process a received media content stream 104 and to communicate a media content event stream 106 to a media content presentation device 108, generically represented as a television or a TV. The media content event stream 106 comprises a video portion that is presented on a display 110 of the media content presentation device 108. An optional audio portion of the media content event stream 106 is reproduced as audible sounds by speakers (not shown) of the media content presentation device 108 or by another media content presentation device. Other embodiments of the media content presentation device 108 may include a personal computer (PC), a lap top computer, a personal device assistant (PDA), a net book, a smart phone, or other electronic media presentation device. Such embodiments may include the display 110 as an integrated component.

In many situations, the media device 102 is configured with a parental control rights scheme that is configured to limit access to certain types of inappropriate media content events. For example, the parental control rights scheme may limit access of young adults or children to adult oriented media content, violent themed media content, offensive language media content, or other inappropriate media content. The media content may include video portions and/or audio portions.

However, in some situations, the parental control rights scheme implemented in the media content device 102 may be defeated or circumvented. In other situations, the parental control rights scheme in the media device 102 is simply not configured to control access to the received media content stream 104. In such situations, young adults or children may gain access to the inappropriate media content event.

Embodiments of the media content analysis system 100 are configured to analyze one or more characteristics of a media content event. The analyzed characteristics of the media content event are compared with a plurality of predefined content characteristics of the media content event. Each of the predefined content characteristics are known to be associated with at least one type of inappropriate media content event. In the event that the analyzed characteristics of the media content event correspond to one or more of the predefined content characteristics, the analyzed media content event is defined as an inappropriate media content event. In response, access to the inappropriate media content event is prevented.

In an exemplary embodiment, if the inappropriate media content event is being currently communicated to the media content presentation device 108, via the media content event stream 106, the communication of the inappropriate media content event may be halted, terminated or otherwise disrupted so that presentation of the inappropriate media content event on the media content presentation device 108 is prevented. In some embodiments, processing of the inappropriate media content event by the media device 102 may be stopped. In another embodiment, reception and/or delivery of the inappropriate media content event may be halted, terminated or otherwise disrupted. In an exemplary embodiment, a "turn off' signal, a channel change signal, or other command may be communicated to the media content presentation device 108. Other embodiments may prevent presentation of the inappropriate media content event in other manners.

The non-limiting exemplary media device 102 comprises a media content stream interface 112, a processor system 114, a memory 116, a program buffer 118, an optional digital video recorder (DVR) 120, a presentation device interface 122, a remote interface 124, an optional external device interface 126, and an optional communication system interface 128. The memory 116 comprises portions for storing the media device logic 130, the media content access logic 132, the media content analysis logic 134, and a media content characteristics database 136. The media content analysis logic 134 may comprise the audio recognition logic 138, the object recognition logic 140, the text recognition logic 142, and/or the character recognition logic 144. The media content characteristics database 136 may comprises the audio database 146, the object database 148 and/or the text database 150. In alternative embodiments, the various logic may be integrated together, and/or may be integrated with other logic. In other embodiments, some or all of these memory and other data manipulation functions may be provided by and using remote server or other electronic devices suitably connected via the Internet or otherwise to a client device. Other media devices 102 may include some, or may omit some, of the above-described media processing components. Further, additional components not described herein may be included in alternative embodiments.

The functionality of the media device 102, here a set top box, is now broadly described. A media content provider provides media content that is received in one or more media content streams 104 from a content provider system (not shown) to which the media device 102 is communicatively coupled to. A plurality of media content events may be multiplexed together in the media content streams 104. The media content streams 104 are communicated to the media device 102 from a media system sourced from a remote head end facility (not shown) operated by the media content provider. Examples of a content provider system include, but are not limited to, a satellite system, a cable system, a fiber optic system, an over the air (OTA) system, and/or the Internet. For example, if the media content provider provides programming via a satellite-based communication system, the media device 102 is configured to receive one or more broadcasted satellite signals detected by an antenna (not shown).

Alternatively, or additionally, the media content stream 104 may be received from one or more external media content source devices 152 to which the external device interface 126 of the media device 102 is coupled to. Examples of an external media content source device 152 include, but are not limited to, a digital video disc (DVD) player, a compact disc (CD) player, a video cassette recorder (VCR), a flash memory medium, a uniform serial bus (USB) flash memory, a disc storage device, a computer, and other memory medium devices.

Alternatively, or additionally, the media content stream 104 may be received from one or more external media content sources 154 to which the communication system interface 128 is coupled, via a communication system 156. Examples of an external media content source 154 include, but are not limited to, a portable media device, a computer, a smart phone, an Internet site, or the like. The communication system 156 is illustrated as a generic communication system. In one embodiment, the communication system 156 comprises a cellular telephone system, such as a radio frequency (RF) wireless system. Accordingly, the media device 102 includes a suitable transceiver. Alternatively, the communication system 156 may be a telephony system, the Internet, a Wi-fi system, a microwave communication system, a fiber optics system, an intranet system, a local access network (LAN) system, an Ethernet system, a cable system, a radio frequency system, a cellular system, an infrared system, a satellite system, or a hybrid system comprised of multiple types of communication media. Additionally, embodiments of the media device 102 may be implemented to communicate using other types of communication technologies, such as but not limited to, digital subscriber loop (DSL), X.25, Internet Protocol (IP), Ethernet, Integrated Services Digital Network (ISDN) and asynchronous transfer mode (ATM). Also, embodiments of the media device 102 may be configured to communicate over combination systems having a plurality of segments which employ different formats for each segment that employ different technologies on each segment.

One or more tuners 158 in the media content stream interface 112 selectively tune to one of the media content streams 104 in accordance with instructions received from the processor system 114. The processor system 114, executing the media device logic 130, and based upon a request for a media content event of interest specified by a user, parses out media content associated with the media content event of interest. The media content event of interest is then assembled into a stream of video and/or audio information which may be stored by the program buffer 118 such that the media content event can be streamed out to the media presentation device 108, via the presentation device interface 122. Alternatively, or additionally, the parsed out media content may be saved into the DVR 120 for later presentation. The DVR 120 may be directly provided in, locally connected to, or remotely connected to, the media device 102.

The exemplary media device 102 is configured to receive commands from a user via a remote control 160. The remote control 160 includes one or more controllers 162. The user, by actuating one or more of the controllers 162, causes the remote control 160 to generate and transmit commands, via a wireless signal 164, to the remote interface 124 of the media device 102. The commands control the media device 102 and/or control the media presentation device 108. The wireless signal 164 may be an infrared signal or a radio frequency (RF) signal.

The above processes performed by the media device 102 are generally implemented by the processor system 114 while executing the media device logic 130. Thus, the media device 102 may perform a variety of functions related to the processing and presentation of one or more media content events received in the media content stream 104.

In the various embodiments, one or more content characteristics of a currently processed media content event are analyzed to identify one or more inappropriate media content characteristics that may be associated with inappropriate media content events. In some embodiments, the media content event may be analyzed as the media content event is received by the media device 102. Alternatively, or additionally, the media content event may be analyzed as the media content event is communicated from the media device 102 to other electronic devices, such as the external media device content source 152, the external media content source 145, or another memory medium for storage.

In the various embodiments, the processor system 114 executes one or more of the logic residing in the media content analysis logic 134. The executing logic is configured to compare characteristics of the analyzed media content event with predefined inappropriate media content characteristics stored in the media content characteristics database 136. The various logic may be separately executed, or two or more of the logic may be executed in cooperation with each other, so as to analyze different types of characteristics of the analyzed media content event.

An exemplary embodiment includes the audio recognition logic 138. The audio recognition logic 138 is configured to compare audio information in the audio portion of the analyzed media content event with predefined audio information residing in the audio database 146. Any suitable audio analysis algorithm that is configured to identify audio information may be employed by the various embodiments. The predefined audio information in the audio database 146 corresponds to inappropriate audio content characteristics. If audio characteristics of the analyzed media content event correspond to the predefined inappropriate audio content characteristics, then communication of the inappropriate media content event may be halted, terminated or otherwise disrupted by an exemplary embodiment so that presentation of the inappropriate media content event on the media content presentation device 108 is prevented.

For example, various words may be associated with adult oriented media content or other inappropriate media content events. For example, the word "sex" may tend to indicate that the analyzed media content event may be adult oriented or inappropriate. The audio information corresponding to the word "sex" would, in this example, reside in the audio database 146. The executing audio recognition logic 138 would detect words or sounds in the analyzed media content event to determine if the word "sex" occurs. In the event that the word "sex" is detected, and since the word "sex" is one of many possible predefined inappropriate words associated with adult oriented or inappropriate content, the embodiments may determine that the analyzed media content event may be adult oriented or inappropriate. Accordingly, the communication of the inappropriate media content event may be halted, terminated or otherwise disrupted by an exemplary embodiment.

As another example, violent or action films may, from time to time, have very loud sounds such as when an explosion, a car crash, a fight, or the like occurs in the presented media content event. The parents or other entities may not wish to permit access to such violent or action films by young adults or children. Sounds associated with explosions, car crashes, fights, or the like have audio characteristics that may be identified. Information corresponding to these audio characteristics may be stored into the audio database 146. The executing audio recognition logic 138 would detect sounds in the analyzed media content event to identify the occurrence of sounds associated with explosions, car crashes, fights, or the like. In the event that such sounds are detected, and since such predefined sounds are associated with inappropriate content, embodiments may determine that the analyzed media content event may be inappropriate. Accordingly, the communication of the inappropriate media content event may be halted, terminated or otherwise disrupted by an exemplary embodiment.

As yet another example, violent or action films may, from time to time, have very loud music. Sounds associated with such music have audio characteristics that may be identified. Information corresponding to these audio characteristics of the music may be stored into the audio database 146. The executing audio recognition logic 138 would detect the music in the analyzed media content event to identify the occurrence of sounds associated with the predefined music. In the event that such music is detected, and since such predefined music is associated with inappropriate content, embodiments may determine that the analyzed media content event may be inappropriate. Accordingly, the communication of the inappropriate media content event may be halted, terminated or otherwise disrupted by an exemplary embodiment.

An exemplary embodiment includes the object recognition logic 140. The object recognition logic 140 is configured to identify objects in the video portion of the analyzed media content event, and compare identified objects with predefined objects residing in the object database 148. Any suitable object recognition algorithm that is configured to identify objects based on video information may be employed by the various embodiments. For example, images or the like may be stored as predefined objects in the object database 148. If identified objects in the analyzed media content event correspond to the predefined objects, then communication of the inappropriate media content event may be halted, terminated or otherwise disrupted by an exemplary embodiment so that presentation of the inappropriate media content event on the media content presentation device 108 is prevented.

For example, an exposed body part of a person may be associated with adult oriented media content or other inappropriate media content events. For example, an exposed breast of a woman may tend to indicate that the analyzed media content event may be adult oriented or otherwise inappropriate. Various images of a woman's exposed breast, here defined as objects in this example, reside in the object database 148. The executing object recognition logic 140 would detect image portions in the analyzed media content event. If one or more of the objects are identified, and since the such objects correspond to predefined objects associated with adult oriented or inappropriate content, embodiments may determine that the analyzed media content event may be adult oriented or inappropriate. Accordingly, the communication of the inappropriate media content event may be halted, terminated or otherwise disrupted by an exemplary embodiment.

As another example, violent or action films may have, from time to time, explosions, car crashes, fighting, or the like in the presented media content event. The parents or other entities may not wish to permit access to such violent or action films by young adults or children. Still images and/or video images corresponding to explosions may be associated with bright colors, rapidly changing shape patterns, or the like. Car crashes may be associated with abrupt edge changes or the like. Fights may be associated with rapid movement of the actors. Alternatively, or additionally, fighting instruments such as guns, swords, knives, or the like may be identifiable in the analyzed media content event. Information corresponding to these inappropriate object characteristics may be stored into the object database 148. The executing object recognition logic 140 would identify objects in the analyzed media content event to identify the occurrence of objects associated with explosions, car crashes, fights, or the like. In the event that such objects are detected, and since such predefined inappropriate objects are associated with inappropriate content, the embodiments may determine that the analyzed media content event may be inappropriate. Accordingly, the communication of the inappropriate media content event may be halted, terminated or otherwise disrupted by an exemplary embodiment.

An exemplary embodiment includes the text recognition logic 142. The text recognition logic 142 is configured to compare text information identified in the video portion of the analyzed media content event with predefined text information residing in the text database 150. Any suitable text recognition algorithm that is configured to identify text based on video information may be employed by the various embodiments. If the identified text of the analyzed media content event corresponds to the predefined inappropriate text, then communication of the inappropriate media content event may be halted, terminated or otherwise disrupted by an exemplary embodiment so that presentation of the inappropriate media content event on the media content presentation device 108 is prevented.

For example, text associated with various words may be associated with adult oriented media content or other inappropriate media content events. For example, the text "Rated X" may tend to indicate that the analyzed media content event may be adult oriented or inappropriate, particularly if such text is presented in the initial portion of analyzed media content. The text "Rated X" would, in this example, reside in the text database 150. The executing text recognition logic 142 would detect text in the analyzed media content event to determine if the text "Rated X" occurs. In the event that the text "Rated X" is detected, and since the text "Rated X" is a rating associated with adult oriented or inappropriate content, embodiments may determine that the analyzed media content event may be adult oriented or otherwise inappropriate. Accordingly, the communication of the inappropriate media content event may be halted, terminated or otherwise disrupted by an exemplary embodiment.

As another example, some types of media content events may include various media, such as an electronic "magazine" that includes stories, articles, and images. If the electronic "magazine" is adult oriented, various words, terms and/or phrases may be used to determine that the electronic "magazine" as inappropriate. A plurality of predefined words, terms and/or phrases may be saved into the text database 150. The executing text recognition logic 142 would detect the text in the analyzed electronic "magazine" to determine if the predefined words, terms and/or phrases occur. In the event that the words, terms and/or phrases are detected, embodiments may determine that the analyzed electronic "magazine" may be adult oriented or inappropriate. Accordingly, the communication of the inappropriate media content event may be halted, terminated or otherwise disrupted by an exemplary embodiment.

As yet another example, some types of web sites accessible over the Internet may include stories, articles, and images. If the web site is adult oriented, various words, terms and/or phrases may be used to determine that the web site is inappropriate. A plurality of predefined words, terms and/or phrases may be saved into the text database 150. The executing text recognition logic 142 would detect the text in the analyzed electronic web site to determine if the predefined words, terms and/or phrases occur. In the event that the words, terms and/or phrases are detected, embodiments may determine that the analyzed web site may be adult oriented or inappropriate. Accordingly, the communication of the inappropriate media content event may be halted, terminated or otherwise disrupted by an exemplary embodiment.

An exemplary embodiment includes the actor recognition logic 144. The actor recognition logic 144 is configured to compare information identified in the video portion and/or the audio portion of the analyzed media content event with predefined information associated with certain actors. Such information associated with certain actors may reside in the audio database 146, the object database 148, and/or the text database 150.

For example, a particular actor's voice may have identifiable characteristics, such as a tonal characteristic, an accent or the like. Any suitable voice recognition algorithm that is configured to identify a person on audio information may be employed by the various embodiments. If the identified voice characteristics of the actor of the analyzed media content event correspond to one of the predefined actors stored in the audio database 146, then communication of the inappropriate media content event may be halted, terminated or otherwise disrupted by an exemplary embodiment.

As another example, a particular actor's image may have identifiable characteristics, such as a famous face and/or hair. Any suitable person recognition algorithm that is configured to identify a person based on video information may be employed by the various embodiments. If identified image of the actor of the analyzed media content event corresponds to one of the predefined actors stored in the object database 148, then communication of the inappropriate media content event may be halted, terminated or otherwise disrupted by an exemplary embodiment.

As yet another example, a particular actor's name may be identifiable. Actor names may be presented in the opening credits of the inappropriate media content event. If identified name of the actor of the analyzed media content event corresponds to one of the predefined actor names stored in the text database 150, then communication of the inappropriate media content event may be halted, terminated or otherwise disrupted by an exemplary embodiment.

In the various embodiments, a single identified sound, word, text, image, and/or object in the analyzed media content event that is associated with a corresponding inappropriate sound, word, text, image, and/or object residing in the media content characteristics database 136 may be sufficient to define the analyzed media content event as an inappropriate media content event. For example, a single instance of the text "Rated X" in the analyzed media content event may be sufficient to warrant the halting, termination, or disruption of the analyzed media content event.

On the other hand, a single instance of a detected sound, word, text, image, and/or object in the analyzed media content event may not be sufficient to warrant the halting, termination, or disruption of the analyzed media content event. For example, a single detected explosion may not be sufficient, alone, to warrant the halting, termination, or disruption of the analyzed media content event.

In some embodiments, the various information stored in the media content characteristics database 136 are assigned a weighting or the like that corresponds to a severity rating of that particular sound, word, text, image, and/or object. For example, a detected image of an exposed breast of a woman may be given a severity rating that is sufficient alone to warrant the halting, termination, or disruption of the analyzed media content event. On the other hand, a detected explosion may be given a lesser severity rating. For example, but not limited to, two explosions may be sufficient to warrant the halting, termination, or disruption of the analyzed media content event. Or, two explosions within a predefined time span or duration in the analyzed media content event may warrant the halting, termination, or disruption of the analyzed media content event. Or, the intensity of explosions may have different severity ratings. For example, a series of relatively small explosions may not be sufficient to warrant the halting, termination, or disruption of the analyzed media content event. On the other hand, a series of relatively large explosions may warrant the halting, termination, or disruption of the analyzed media content event. Thus, detected characteristics of the sound, word, text, image, and/or object of the analyzed media content event may be compared against thresholds or the like that are associated with the corresponding characteristics stored in the media content characteristics database 136.

In some embodiments, a plurality of different characteristics may be considered in total. For example, the sound of an explosion and the image of the explosion may be considered together. As another example, the sound of the music and the image of the explosion may be considered together to determine if halting, termination, or disruption of the analyzed media content event is warranted. Any number of and/or combination of determined characteristics of the analyzed media content event may be considered together. That is, patterns of determined characteristics may be evaluated together.

In addition to halting, terminating, or disrupting presentation of the analyzed media content event on the media presentation device 108, some embodiment may be configured to halt, terminate, or disrupt other functions associated with the analyzed media content event. For example, embodiments may prevent storage of the analyzed media content event to a memory medium which may be accessed at a later time and/or which may be communicated from the memory medium to an uncontrolled media device. As another example, embodiments may prevent communicating of the analyzed media content event to an uncontrolled remote electronic device.

It should be emphasized that the above-described embodiments of the media content analysis system 100 are merely possible examples of implementations of the invention. Many variations and modifications may be made to the above-described embodiments. All such modifications and variations are intended to be included herein within the scope of this disclosure and protected by the following claims.

## Claims

1. A method, comprising:
receiving a media content event;
identifying at least one characteristic of the media content event;
comparing the identified characteristic with a plurality of predefined content characteristics, wherein each of the predefined content characteristics are associated with at least one type of inappropriate media content event; and
defining the media content event as an inappropriate media content event in response to the identified characteristic corresponding to at least one of the plurality of predefined content characteristics.

2. The method of claim 1, wherein the identifying and the comparing comprises:
identifying an object in a video portion of the received media content event; and
comparing the identified object with a plurality of predefined objects residing in a media content characteristic database, wherein the plurality of predefined objects are associated with inappropriate media content events.

3. The method of claim 1 or 2, wherein the identifying and the comparing comprises:
identifying an audio characteristic in an audio portion of the received media content event; and
comparing the identified audio characteristic with a plurality of predefined audio information residing in a media content characteristic database, wherein the plurality of predefined audio information are associated with inappropriate media content events.

4. The method of claim 1, 2 or 3, wherein the identifying and the comparing comprises:
identifying text in a video portion of the received media content event; and comparing the identified text with a plurality of predefined text residing in a media content characteristic database, wherein the plurality of predefined text are associated with inappropriate media content events.

5. The method of any preceding claim, wherein the identifying and the comparing comprises:
identifying an actor of the received media content event; and
comparing the identified actor with a plurality of predefined actors identified in a media content characteristic database, wherein the plurality of predefined actors are associated with inappropriate media content events.

6. The method of claim 5, wherein identifying the actor comprises:
identifying an image, a voice, and/or a name of the actor; and
comparing the identified image, voice and/or name of the actor with a plurality of predefined images, voices and/or names of actors identified in the media content characteristic database.

7. The method of any preceding claim, comprising:
halting presentation of the defined inappropriate media content event on a media content presentation device.

8. The method of claim 7, wherein halting presentation comprises:
preventing communication of the defined inappropriate media content event to the media content presentation device, or preventing reception of the media content event.

9. The method of any preceding claim, comprising:
preventing storage of the defined inappropriate media content event on a memory media, or communication of the defined inappropriate media content event to a remote electronic device.

10. A media device, comprising:
a media content stream interface configured to receive a media content event;
a memory configured to store a plurality of media content characteristics in a media content characteristic database; and
a processor system communicatively coupled to the media content stream interface and the memory, wherein the processor system is configured to:
identify at least one characteristic of the media content event;
compare the identified characteristic with a plurality of predefined content characteristics, wherein each of the predefined content characteristics are associated with at least one type of inappropriate media content event; and
define the media content event as an inappropriate media content event in response to the identified characteristic corresponding to at least one of the plurality of predefined content characteristics.

11. The media device of claim 10, further comprising:
a presentation device interface configured to communicatively couple to a media content presentation device,
wherein the processor system is configured to prevent a presentation of the defined inappropriate media content event on the media content presentation device.

12. The media device of claim 10 or 11, wherein the processor system is configured to prevent reception of the defined inappropriate media content event at the media content stream interface.

13. The media device of claim 10, 11 or 12, further comprising:
a communication system interface configured to communicatively couple to a communication system,
wherein the processor system is configured to prevent communication of the defined inappropriate media content event to a remote electronic device coupled to the communication system.

14. The media device of any of claims 10 to 13, further comprising:
a digital video recorder (DVR) configured to store media content events,
wherein the processor system is configured to prevent storing of the defined inappropriate media content event on the DVR.

15. A method, comprising:
communicating a media content event to a media content presentation device;
analyzing the communicated media content event to identify at least one characteristic of the media content event;
comparing the identified characteristic with a plurality of predefined content characteristics stored in a media content characteristic database, wherein each of the predefined content characteristics are associated with at least one type of inappropriate media content event; and
preventing communication of the media content event to the media content presentation device in response to the identified characteristic corresponding to at least one of the plurality of predefined content characteristics.
